Europäisches Patentamt

European Patent Office

Office européen des brevets

(11) Veröffentlichungsnummer: **0 247 309**
A1

# (12) EUROPÄISCHE PATENTANMELDUNG

(21) Anmeldenummer: **87104158.8**

(51) Int. Cl.⁴: **B 65 G 17/36**

(22) Anmeldetag: **20.03.87**

(30) Priorität: **12.04.86 DE 3612424**

(43) Veröffentlichungstag der Anmeldung: **02.12.87**
**Patentblatt 87/49**

(84) Benannte Vertragsstaaten: **ES FR GB IT NL SE**

(71) Anmelder: **O & K Orenstein & Koppel Aktiengesellschaft, Brunsbütteler Damm 144, D-1000 Berlin (DE)**

(72) Erfinder: **Krüger, Rolf, Dipl.-Ing., Kronsforder Koppel 22, D-2400 Lübeck (DE)**

(74) Vertreter: **Möllering, Karl Friedrich, Elsässer Strasse 31, D-2400 Lübeck (DE)**

(54) **Gurtbecherwerk.**

(57) Gurtbecherwerk, bei dem jeder Becher (1, 2) in Förderrichtung gesehen über zwei hintereinander liegende, bewegliche Befestigungen mit dem Gurt (4) verbunden ist, wobei jeder Becher zwischen den Befestigungsgelenken (5, 6) senkrecht oder etwa senkrecht zur Gurtebene geteilt ist, und beide geteilten Seitenflächen (16, 17) über koaxial liegende Gelenke (10) wie Bolzenlagerung oder dgl. miteinander verbunden sind.

EP 0 247 309 A1

**DR. RER. POL. DR.-ING.**
# KARL F. MÖLLERING
**PATENTANWALT**
Professional Representative before the European Patent Office
Mandataire agréé prés l'Office Européen des Brevets

0247309

2400 LÜBECK 1, d. 10.04.86
ELSASSER STRASSE 31
FERNRUF 0451/630 55 u. 621910

Bankkonto:
Dresdner Bank AG. in Lübeck
Postscheckkonto: Hamburg 466 46-206

Dr. Dr. Mö/kb
PAT 5896

O&K Orenstein & Koppel Aktiengesellschaft, Berlin

Gurtbecherwerk

Die Erfindung betrifft ein Gurtbecherwerk, bei dem jeder Becher in Förderrichtung gesehen über zwei hintereinander liegende, bewegliche Befestigungen mit dem Gurt verbunden ist.

In der DE-OS 2.732 932 sind derartige Gurtbecherwerke beschrieben und gezeigt, die insbesondere für grobkörniges Fördergut geeignet sein soll. Die Beschreibung DE-OS setzt Becherbefestigungen mittels einer Schraubenleiste bzw. einer einvulkanisierten Flachstahlleiste als bekannt voraus. Diese Befestigungen haben neben der pendelnden Becheraufhängung den Nachteil, daß sich Material zwischen Gurt und Becherrücken verklemmen und den Gurt zerstören könne. Die Befestigung mit der einvulkanisierten Flachstahlleiste sei sehr teuer. Die Befestigung mittels am Gurt aufvulkanisierter Befestigungsaugen sei infolge der geringen Haftkraft der Augen am Gurt nur für kleinere Schöpfkräfte geeignet. Die genannte DE-OS befaßt sich mit der Aufgabe, ein Becherwerk zu schaffen, das auch für grobstückiges Fördergut und für hohe Förderleistungen geeignet sei. Insbesondere soll auch die Befestigung größere Schöpfkräfte aufnehmen, einen ruhigeren Gurtlauf sichern und eine lange Lebensdauer garantieren.

- 2 -

Diese Aufgabe wird bei dem vorbekannten Gurtbecherwerk dadurch gelöst, daß jeder Becher mittels mindestens vier in zwei Reihen angeordneten Befestigungsleisten befestigt ist. Die Becherrückwand ist mittels an ihr angeschraubtem Befestigungswinkel in einem derartigen Abstand vom Gurt gehalten, daß ein Verklemmen von Fördergut vermieden wird. Durch die vorbekannte Befestigung der Becher mittels zweier Reihen von Befestigungsleisten soll ein Pendeln der Becher verhindert werden. Der Abstand zwischen Gurt und der Becherrückwand kann entsprechend der Körnung des Fördergutes gewählt bzw. nachträglich noch auf ein gewünschtes Maß eingestellt werden.

Die DE-PS 932118 beschreibt und zeigt ein Becherwerk für körniges Gut wie Gerste, Grünmalz oder dergleichen, wobei die Becher an zwei Gliederketten befestigt sind. Zum Stand der Technik erläutert die genannte DE-PS, daß Becherwerke bekannt seien, die mit vor der Öffnung der Becher angeordneten Prallwänden versehen seien, die sich daher sowohl für vertikalen als auch für horizontalen Transport des Fördergutes eignen. Diese Becher seien jedoch einteilig. Nachteilig sei, daß das Fördergut von den Bechern nicht selbsttätig aufgenommen werde, sondern daß die Becher mittels einer Schurre beschickt werden müssen. Insbesondere sei ein Aufnehmen des Fördergutes an der Stelle, an der die Becher um eine Umlenkrolle laufen, nur unvollkommen. Die vorbekannte DE-PS befaßt sich mit der Aufgabe, ein Becherwerk für körniges Gut und insbesondere ein Becherwerk für die Wanderhaufenmälzerei zu schaffen, bei welchem die Gefahr des Herabfallens und Zerquetschens von Körnern im Becherbetrieb weitgehend vermieden werde. Dies soll bei dem vorbekannten Becherwerk dadurch geschehen, daß jeder Becher aus einem Hauptbecher und einem gelenkig mit diesem verbundenen Vorbecher besteht. Dabei setzt sich der Vorbecher in Förderrichtung gesehen vor die Öffnung des zweiteiligen Bechers und bildet eine Prallwand. Durch diese werden jene Teile des körnigen Gutes aufgefangen und am Herabfallen gehindert, die an den Umlenkstellen beim Übergang von einer Förderrichtung in eine anschließende andere Förderrichtung durch die Beschleunigung aus den Bechern geschleudert werden könnten.

Dabei können die Prallwände auf einer Verlängerung des Becherbodens angeordnet sein, so daß sie mit dieser Bodenverlängerung
einen Vorbecher bilden, der mit dem Hauptbecher gelenkig verbunden ist. Derartige, mit Gliederketten ausgerüstete Becherwerke können nur verhältnismäßig langsam umlaufen, sind teuer
in der Anschaffung und in der Wartung.

Der vorliegenden Erfindung liegt die Aufgabe zugrunde, Gurtbecherwerke zu schaffen, die insbesondere für kleine Umlenktrommeln geeignet sind, die mit verhältnismäßig großer Geschwindigkeit umlaufen können und bei denen die Gefahr der Bildung von
keilförmigen Zwischenräumen beim Umlauf des Bechers um die Umlenktrommel soweit als möglich vermieden ist, so daß auch die
Gefahr der im Umlauf störenden Füllungen derartiger keilförmiger Zwischenräume herabgesetzt ist. Die Füllung dieser keilförmigen Zwischenräume würde die Rückkehr des Bechers in Normallage bei gestrecktem Gurt behindern, außerdem soll die Verwendung einfacher Befestigungsmittel für die Becher ermöglicht
werden. Durch eine Verbesserung des Umlaufes könnte nach Möglichkeit auch eine Verbesserung der Umlaufgeschwindigkeit
erzielt werden.

Die Erfindung löst die gestellte Aufgabe mit den Merkmalen des
Hauptanspruchs. Weitere vorteilhafte Ausführungsformen sind
Gegenstand der Unteransprüche.

Die Erfindung hat den Vorteil, daß für das Becherwerk Umlenktrommeln eines verhältnismäßig geringen Durchmessers verwandt
werden können. Dabei wird die Bildung von störenden, im Profil
keilförmigen Zwischenräumen jeweils zwischen den Rücken der
Becher und dem Gurt beim Umlaufen um die Umlenktrommel weitgehend vermieden. Der Becher wird nach dem Umlauf des Becherwerkes um die Trommel nicht daran gehindert, in seine Normallage - beispielsweise bei gestrecktem Gurt - überzugehen.
Der Umlauf des Becherwerkes um die Umlenktrommeln wird nicht
gestört.

Das Becherwerk kann mit verhältnismäßig großer Geschwindigkeit laufen. Zur Befestigung der Becher am Gurt können einfache Befestigungsmittel verwendet werden, da die Befestigung weitgehend zwangskräftefrei ist. Die Befestigungsmittel und der Gurt sind nicht störenden Belastungen ausgesetzt. Die erfindungsgemäße Befestigung schafft eine für alle Krümmungsradien von Umlenktrommeln praktisch zwangsfreie Verbindung zwischen Bechern und Gurt. Der Gelenkpunkt zwischen den beiden Becherhälften, sowie die beiden beweglichen Befestigungen der Becherhälften am Gurt bilden zusammen ein Stützdreieck, wobei die Basis dieses Stückdreiecks zwischen den Befestigungspunkten am Gurt flexibel ist. Diese Basislänge der Befestigung paßt sich den jeweiligen Abständen beim Durchlauf von geraden Strecken und von positiven und negativen Krümmungen an.

Das Gelenk zwischen den Becherhälften bzw. die Gelenke der Befestigungen der Becherhälften am Gurt können unterschiedlich ausgebildet sein. Eine einfache Ausführungsform besteht dabei darin, daß das Gelenk zwischen den beiden Becherhälften als unausgebuchste Bolzenlagerung oder als Buchsenlagerung ausgeführt ist. Die Verbindung kann auch eine Gummibuchsenlagerung sein, die Verdrehungen aufnimmt. Alle Gelenkpunkte können auch als Einkugel-Gelenklager ausgebildet sein. Die Ausbildung der Gelenke richtet sich nach den jeweiligen Erfordernissen nach den verwendeten Baustoffen.

Damit die Lageänderungen der beiden Becherhälften beim Umlauf um die Umlenktrommel erleichtert wird, auch wenn man den Becher so ausbilden will, daß die Außenflächen beider Becherteile miteinander fluchten, können die Außenflächen zur Ermöglichung der Bewegung der Becherteile gegeneinander im Berührungsbereich zurückgeschnitten sein. Die Rückschnitte gehen dabei radial von den Gelenkpunkten aus.

Um den Abstand zwischen den Stirnkanten der einander gegenüber liegenden Seitenfläche der geteilten Becher bei der Bewegung der Becher gegeneinander abzudecken, können die Seitenflächen jeweils eines Bechers mit Überbrückungslaschen versehen sein, dadurch wird das Eindringen von Material zwischen den sich auseinander spreizenden Stirnkanten der Becherteile vermieden. Diese Überbrückungslaschen können im Bereich von Materialbeanspruchungen aus Flacheisen, Flachstahl oder dergleichen bestehen. Im übrigen können die Überbrückungslaschen aus einem elastischen Material wie Gummi oder dergleichen gebildet sein. Diese Überbrückungs- laschen sind jeweils nur an einer Becherhälfte befestigt, so daß sie sich nicht gegenseitig stören.

Weitere Einzelheiten der Erfindung sind Gegenstand der Unteransprüche. Die Erfindung ist anhand dessen in der Zeichnung dargestellten Ausführungsbeispieles näher erläutert und zwar zeigen

Fig. 1 - einen Becher gemäß der Erfindung in Seitenansicht

Fig. 2 - eine Ansicht auf Fig. 1 in der Schnittebene A - B.

Fig. 3 - einen Becher gemäß Fig. 1 beim Umlauf um eine Umlenktrommel.

Fig. 4 - eine Seitenansicht eines Ausschnittes einer anderen Gelenkverbindung.

Der Becher besteht einmal aus dem Becherrückteil 1 und zum anderen aus dem Bechervorderteil 2. Die beiden Becherteile 1 und 2 können nach Herstellung eines geschlossenen normalen Bechers durch Aufschneiden in der später erörterten Schnittebene gebildet sein. Im Ausführungsbeispiel ist der Becher durch die Schnittebene 3 geteilt, die senkrecht oder etwa senkrecht zum Gurt 4 verläuft. Der Becherrückteil 1 ist über ein Befestigungsgelenk 5 in ansich bekannter Weise am Gurt 4 befestigt, in ähnlicher Weise ist der Bechervorderteil 2 über ein ansich bekanntes Befestigungsgelenk 6 am Gurt 4 befestigt. Der Bechervorderteil 2 ist mit einer Schneidkante 7 versehen.

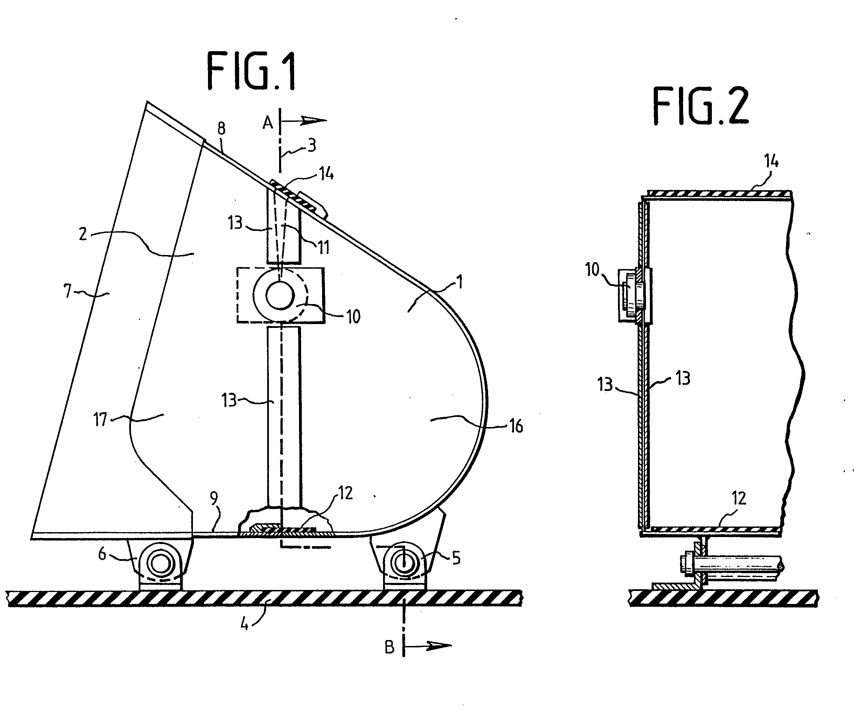

Die Außenflächen 8 und die Innenflächen 9 beider Becherteile 1
und 2 fluchten in der in Fig. 1 dargestellten Lage, da beide
Becherteile 1 und 2 durch Aufschneiden eines Bechers gebildet
sind. Die beiden Becherteile 1 und 2 sind durch ein Gelenk wie
Bolzenlagerung 10 miteinander verbunden, die im oberen Bereich
der Schnittebene 3 angeordnet ist. Anstelle der dargestellten
nicht ausgebuchsten Lagerung kann auch eine Buchsen- oder
Gummibuchsenlagerung oder eine Einkugel-Gelenklagerung treten.
Jede andere geeignete Lagerung kann verwendet werden.

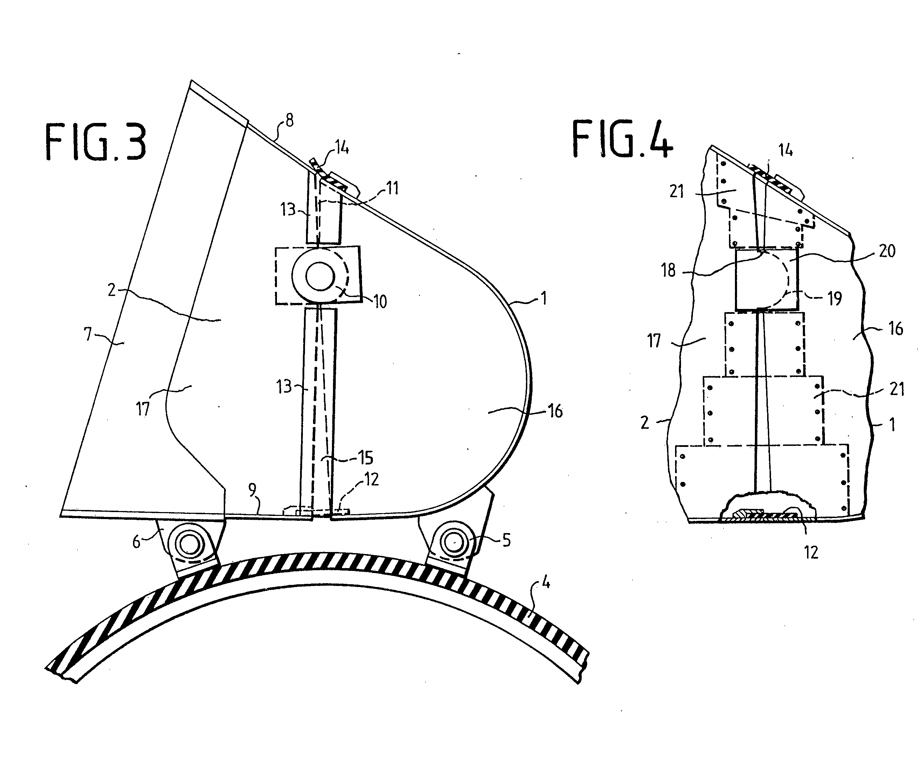

Die Außenfläche beider Becherteile 1 und 2 bzw. eines Becherteiles ist oberhalb der Bolzenlagerung 10 zurückgeschnitten 11,
wie in Fig. 1 angedeutet. Diese Anordnung ermöglicht den Lauf
der Becher sowohl über konvexe als auch konkave Krümmungen.
Dadurch ist die Bewegung der beiden Becherhälften gegeneinander
in die in Fig. 3 dargestellte Lage ohne Zwängung der Einzelteile
möglich.

Der Bechervorderteil 2 ist an seiner Unterkante im Bereich der
Schnittebene mit einer Gummilasche 12 versehen, damit Material
nicht in den Spalt zwischen den beiden Becherteilen 1 und 2
dringen kann.

In gleicher Weise ist jeweils der Bechervorderteil 2 in seinem
mittleren Bereich in der Schnittebene oberhalb und unterhalb der
Bolzenlagerung 10 mit Überbrückungsleisten 13 versehen, die
ebenfalls zum überdecken eines sich bildenden Spaltes dienen.
Auch auf der Oberseite des Bechers ist eine Überbrückungsleiste 14
vorgesehen, die aus Gummi gebildet ist und die in der Zeichnung des
Ausführungsbeispieles ausnahmsweise am anderen Becherteil dargestellt ist, um die Befestigungsmöglichkeiten zu erörtern.

Fig. 3 zeigt die Bewegung der beiden Becherteile 1 und 2 gegeneinander beim Umlaufen um eine Umlenktrommel. Dabei entfernen
sich die beiden Befestigungsgelenke 5 und 6 von einander, so daß
sich ein Spalt 15 zwischen den beiden Becherteile 1 und 2 bildet,
der durch die Überbrückungsleiste 13 überdeckt ist.

In Figur 4 ist eine sehr einfache Verbindung der beiden
Becherteile 1 und 2 dargestellt. Bei dieser Bauform fluchten
die Seitenwände, die eine Seitenwand bzw. Seitenfläche ist im
Bereich des Gelenkpunktes mit einem nasenförmigen Vorsprung 18
versehen, während die gegenüberliegende Seitenfläche 16 mit einer
entsprechenden Ausnehmung 19 versehen ist. Die beiden Teile
greifen gleichsam gelenkartig ineinander. Zur Verhinderung
der Seitenbewegungen der beiden Becherteile 1 und 2 sind auf
der Außen- und/oder der Innenwand der Seitenflächen 16,17
Abdeckplatten 20 aufgesetzt. Des weiteren sind die Becherteile
1 und 2 durch Gummistreifen 21 miteinander verbunden, die
eine Bewegung der Becherteile 1 und 2 gegeneinander ermöglichen
und ein Herausfallen des Gutes verhindern. Dabei erfahren die
Gummistreifen 21 in der Nähe des so gebildeten Gelenkes 18,19
eine geringere Dehnung als die weiter entfernt von dem Gelenkpunkt 18, 19 liegenden Gummistreifen 21.

0247309

Lübeck, den 9.4.1986
Dr.Dr. Mö/ha
PAT 5896

O&K Orenstein & Koppel Aktiengesellschaft, Berlin

Ansprüche

1. Gurtbecherwerk, bei dem jeder Becher in Förderrichtung gesehen über zwei hintereinander liegende, bewegliche Befestigungen mit dem Gurt verbunden ist, dadurch gekennzeichnet, daß jeder Becher zwischen den Befestigungsgelenken (5,6) in senkrecht oder etwa senkrecht zur Gurtebene geteilt und beide geteilten Seitenflächen (16,17) über koaxial liegende Gelenke wie Bolzenlagerung (10) oder dgl. miteinander verbunden sind.

2. Gurtbecherwerk nach Anspruch 1, dadurch gekennzeichnet, daß die Gelenke wie Bolzenlagerung (10) oder dgl. im oberen Bereich der Schnittebene (3) angeordnet sind.

3. Gurtbecherwerk nach Anspruch 1 oder 2, dadurch gekennzeichnet, daß die Außen- und Innenflächen (8,9) beider Becherteile (1,2) miteinander fluchten und die Seitenflächen (16,17) zur Ermöglichung der Bewegung der Becherteile (1,2) gegeneinander im oberen oder im oberen und unteren Berührungsbereich zurückgeschnitten (11) sind.

4. Gurtbecherwerk nach Anspruch 3, dadurch gekennzeichnet, daß zur Überbrückung des Abstandes zwischen den Stirnkanten der einander gegenüberliegenden Seitenflächen (16,17), jeweils die Seitenflächen (16,17) eines Becherteiles (1,2) mit Überbrückungslaschen bzw. -leisten (12,13,14) versehen sind.

5. Gurtbecherwerk nach Anspruch 4, dadurch gekennzeichnet, daß die an den Seitenflächen (16,17) angeordneten Überbrückungsleisten(13) aus Flacheisen, Flachstahl oder dergleichen bestehen.

6. Gurtbecherwerk nach Anspruch 5, dadurch gekennzeichnet, daß die Überbrückungsleisten (12, 14) aus einem elastischen Material wie Gummi oder dergleichen bestehen.

7. Gurtbecherwerk nach Anspruch 1 oder 2, dadurch gekennzeichnet, daß die Außenflächen einander überlappen.

8. Gurtbecherwerk nach Anspruch 7, dadurch gekennzeichnet, daß die einander gegenüberliegenden Seitenflächen (16,17) im Gelenkpunkt ein Auge bilden und jeweils über einen Bolzen miteinander verbunden sind.

9. Gurtbecherwerk nach Anspruch 1-4, dadurch gekennzeichnet, daß die Seitenflächen (16,17) fluchten und ein Becherteil (1,2) im Gelenkpunkt einen nasenförmigen Vorsprung (18) und der andere Becherteil (1,2) eine entsprechende Ausnehmung (19) trägt.

10. Gurtbecherwerk Anspruch 9, dadurch gekennzeichnet, daß zur Verhinderung der Seitenbeweglichkeit der Becherteile (1,2) gegeneinander im Gelenkbereich außen und/oder innen Abdeckplatten (20) an den Seitenflächen (16,17) befestigt sind.

11. Gurtbecherwerk nach Anspruch 9 und 10, dadurch gekennzeichnet, daß die Becherteile (1,2) durch innen- und/oder außen aufgesetzte Gummistreifen (21) miteinander verbunden sind, wobei die im Gelenk (18, 19) näher liegenden Gummistreifen (21) eine geringere Dehnung erfahren als die weiter entfernt liegenden Gummistreifen (21).

FIG.2

FIG.1

FIG.3

FIG.4

8

14

13

11

2

13

1

7

17

10

16

13

15

12

9

6

5

4

21

14

18

20

19

17

16

2

21

1

12

2/2

0247309

0247309

Europäisches
Patentamt

# EUROPÄISCHER RECHERCHENBERICHT

Nummer der Anmeldung

EP 87 10 4158

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | SOVIET INVENTIONS ILLUSTRATED, Sektion Mechanik, Woche E25, 4. August 1982, Zusammenfassungsnr. H4583 Q35, Derwent Publications Ltd., London GB; & SU - A - 859 256 (DYUKOVAZS) 30.08.1981 | 1,7 | B 65 G 17/36 |
| | --- | | |
| A | AT-B- 337 601 (MASCHINENFABRIK HEID) * Seite 2, Zeilen 32-41; Figur 2 * | 1 | |
| | --- | | |
| A | US-A-1 357 919 (WHILE et al.) * Seite 1, Zeilen 10-35; Figuren 1, 2 * | 1 | |
| | --- | | |
| D,A | DE-A-2 732 932 (DOUBRAVA) * Anspruch 1, Figuren 1-4 * | 1 | RECHERCHIERTE SACHGEBIETE (Int. Cl.4) |
| | --- | | B 65 G 17/00 |
| D,A | DE-C- 932 118 (BRÜDER REININGHAUS BRAUEREI) * Seite 2, Zeilen 8-45; Figuren 1, 2 * | 1 | E 02 F 3/00 |
| | ----- | | |

Der vorliegende Recherchenbericht wurde für alle Patentansprüche erstellt.

| Recherchenort BERLIN | Abschlußdatum der Recherche 31-08-1987 | Prüfer SIMON J J P |
|---|---|---|

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82